# EUROPEAN PATENT SPECIFICATION

(11) **EP 0 360 453 B1**
(45) Date of publication and mention of the grant of the patent: **27.11.1996**
(21) Application number: 89308979.7
(22) Date of filing: 05.09.1989
(51) Int. Cl.: C08F 4/02, C08F 4/16, C08F 4/64

(54) **Silicate-modified magnesium alkoxide polymerization catalysts**
Silikatmodifiziertes Magnesiumalkoxyd als Polymerisationskatalysator
Catalyseur de polymérisation à base d'alkoxyde de magnésium, modifié de silicate

(30) Priority: 06.09.1988 US 240298
(43) Date of publication of application: 28.03.1990
(73) Proprietor: SHELL OIL COMPANY, Houston Texas 77002 (US)
(72) Inventor: Job, Robert Charles, Houston Texas 77077 (US)
(74) Representative: Cresswell, Thomas Anthony

(56) References cited:
- EP-A- 0 319 173
- DE-A- 2 757 725

## Description

This invention relates to a process for preparing a support for a polymerization catalyst component for use in the production of olefin polymers. More particularly, the present invention relates to improving the productivity of polymerization catalysts formed from magnesium alkoxides which normally undergo poor metathesis towards production of a magnesium halide support.

Experience has shown that the best magnesium halide-supported transition metal compound, particularly titanium tetrahalide, catalyst components for use in olefin polymerization are prepared via metathesis of a suitable magnesium compound rather than by forceful mechanical and chemical treatment of a magnesium halide, such as magnesium chloride. Very good commercial polymerization catalyst components have been prepared via metathesis of magnesium ethoxide using titanium tetrachloride in the presence of an ester and, optionally, a halohydrocarbon as disclosed in US-A-4,400,302 and US-A-4,414,132. It is difficult to react magnesium metal with ethanol and therefore magnesium is usually activated in some fashion before attempting the reaction with ethanol. Furthermore, it is extremely difficult to precipitate product (and therefrom to prepare catalyst components) of controllably uniform particle size and shape. On the other hand, magnesium reacts exo-thermally with methanol to give relatively stable solutions of magnesium methoxide in methanol at room temperature. Despite the synthetic convenience of magnesium methoxide, the commercially available solid material has proven intractable towards direct metathesis with traditional halogenating agents such as silicon- or titanium tetrahalides. It is thought that magnesium methoxide does not metathesize well because of the extreme thermodynamic stability of the polymeric forms, [Mg(OMe)₂.mMeOH] and [Mg(OMe)₂]ₙ which are formed either upon evaporation of methanol from a Mg(OMe)₂ solution or as an insoluble precipitate upon boiling a methanolic Mg(OMe)₂ solution. The present invention seeks to utilize the ease of reaction of magnesium with methanol and capitalize upon the high solubility of the reaction product in order to produce a superior catalyst precursor, to cause a beneficial transformation of magnesium methoxide into magnesium ethoxide and then to utilise the ease of metathesis of magnesium ethoxide to produce a highly effective polymerization catalyst component.

EP-A-319173 discloses the preparation of a solid olefin polymerisation catalyst component by the reaction of a magnesium alkoxide dissolved in a liquid hydrocarbon with a transition metal halide in the presence of an alkoxide of a metal of Group IV b, V b or VI b of the Periodic Classification. DE-A-2757725 discloses the preparation of a solid support for an ethylene polymerisation catalyst component by the reaction in an inert atmosphere of an aluminium trihalide, an organic compound containing an Si-0 bond and/or an ether compound, and a magnesium dihydrocarbyloxy compound.

The present invention provides a process for preparing a support for use in the preparation of a polymerisation catalyst component which comprises reacting, in the absence of an aluminium halide, a magnesium methoxide, optionally having bound methanol, with an alkoxysilane of the formula R'ₘSi(OR)₄₋ₘ, wherein R is CₙH₂ₙ₊₁, n is at least 2, m is from 0 to less than 4 and R' is aryl or alkyl, to form a magnesium alkoxide which more readily undergoes metathesis with a halogen compound than does the starting magnesium methoxide, the reaction being carried out at a temperature at or above the temperature at which the alcohol formed, and any bound methanol, dissociates from the magnesium alkoxide formed.

The magnesium alkoxide resulting from this process can be subjected to metathesis with, for example, a halogen compound of a transition metal such as titanium tetrachloride to form a supported polymerization catalyst component or procatalyst for use as an olefin polymerization catalyst component.

Magnesium methoxide (Mg(OMe)₂.mMeOH 0 ≤ m ≤ 4) is an example of a magnesium methoxide which normally undergoes poor metathesis towards production of magnesium chloride. Metathesis is the reaction of the magnesium alkoxide with a halogen compound such as silicon tetrahalide or titanium tetrahalide, preferably the tetrachloride, to form a magnesium halide which can be used as the support material for a procatalyst of an olefin polymerization catalyst. Other examples of poor metathesis magnesium methoxides are the crystalline Mg₄(OCH₃)₆(CH₃OH)₁₀X, where X is a counter ion or ions with a total charge of -2; for example X can be 2Cl, 2Br, methacrylate, butyrate, acrylate, acetate, resorcinolate, 2,4-pentanedionate, propionate, benzoate or chloroacetate. When using these compounds it is preferred that any bound methanol, or methanol solvate, be partially removed. The metathesis reaction, the formation of olefin polymerization procatalysts and processes for polymerizing olefins with such procatalysts are disclosed in many patents including US-A-4,400,302, US-A-4,414,132 and US-A-4,710,482.

As discussed above, magnesium ethoxide undergoes metathesis to, for example, magnesium chloride relatively easily. One object of the present invention is to convert a magnesium methoxide which undergoes poor metathesis to a magnesium alkoxide, a magnesium ethoxide in particular, which undergoes metathesis relatively easily. In order to achieve the largest possible equilibrium shift and the most efficient methoxide to ethoxide conversion, it is preferred to use tetraethoxysilane, tetra-n-propoxysilane, tetraisopropoxysilane or tetrabutoxysilane. Tetraethoxysilane is preferred because of ready and inexpensive commercial availability.

If an alcohol is bound to the starting magnesium alkoxide, a portion of that will be converted to the alcohol of the alkoxysilane and may bind to the newly formed magnesium alkoxide. Accordingly, the alkoxysilane treatment is carried out at a temperature above that necessary to dissociate any bound alcohol. Thus, if the alkoxysilane is tetraethoxysilane, the alcohol formed is ethanol and it will dissociate from the newly formed magnesium alkoxide at or above 105°C in the absence of a solvent or in the presence of a higher boiling point solvent. If the bound alcohol is not removed, the efficiency of the succeeding halide metathesis reaction may be reduced. In general, the alkoxide transformation is carried out at a temperature significantly above the alcohol dissociation point for the additional reason that the reaction will occur much more rapidly at higher temperature. In some cases, in order to moderate the reactivity and to help maintain desirable precursor morphology, it is appropriate to dilute the alkoxysilane with an inert solvent. In those cases the solvent chosen should boil at no lower than the above-mentioned alcohol dissociation point, i.e. about 105°C for ethanol.

When the alkoxysilane is diluted with an inert solvent, such as cyclohexane or kerosene, which forms a lower boiling azeotrope with the bound alcohol the treatment temperature may be reduced. An azeotrope is preferred because it binds up alcohol and thus prevents it from catalyzing the polymerization of the starting magnesium alkoxide. The removal of the alcohol should be carried out as quickly as possible to reduce the amount of polymerization. Other suitable solvents include chlorobenzene, isooctane, decahydronaphthalene, tetrahydronaphthalene, xylene, toluene, kerosene, cyclohexane, and high boiling kerosene fractions.

The following Examples serve to illustrate the invention. Examples 1 to 5 and Comparative Example 1 describe the preparation of magnesium alkoxides which can readily undergo metathesis. Examples 6 to 10 and Comparative Example 2 describe metathetical reactions resulting in the formation of procatalysts and Examples 11 to 15 and Comparative Example 3 describe olefin polymerizations carried out using the procatalysts.

### Example 1

Powdered Mg(OMe)₂.2MeOH (20 g, 0.13 mol) was placed in a 500 ml Schlenk flask with 200 ml of tetraethoxysilane (TEOS) and brought to distillation temperature while stirring. About 5-10 ml distilled at 67°C (methanol), about 5 ml at 78°C (ethanol) then the temperature rose to near 127°C where another 20-30 ml distilled over. The head temperature was allowed to rise very slowly to about 137°C where a final 20 ml was collected and the distillation was stopped. The flask contained a pale yellow to white glassy-crystalline mass. The crystals were washed once with TEOS, three times with isooctane, twice with isopentane then dried under moving nitrogen. Yield 13.2 g (89%). The dried crystals were gently rubbed through a 150 µm sieve whereupon 10.4 g collected on a 75 µm screen.

### Example 2

Magnesium (104 g, 4.28 mol) was added portionwise to a mixture of 1.2 1 of methanol and 130 ml TEOS in a 3-litre-3-neck flask. Overnight stirring yielded a crystalline slush from which no solvent could be decanted. TEOS (1500 ml) was added as the slush was gently broken up with a spatula to produce a thick milky slurry which turned cold while stirring and turned white and thickened over an hour of stirring. The extremely thick slurry was diluted in two steps: 66% was diluted with 700 ml TEOS and 33% of that was diluted to 21 with TEOS to provide a milky slurry containing the equivalent of 22 g magnesium. The slurry was heated to a pot temperature of 93-94°C and allowed to reflux for 1.5 hr with vigorous stirring. The temperature was raised slowly as distillation was commenced. The entire distillate came over at 78-80°C as the pot temperature rose to 143°C over about 1.5 hr. During this period the milky slurry had undergone a transformation to a suspension of grey granular material. Heating was stopped and the flask allowed to cool to room temperature. Filtration of the slurry through a coarse frit was very rapid. The solid product was washed with isooctane then dried under moving nitrogen. Yield 106 g (89%). Microscopic examination revealed a narrow size distribution of glassy particles most of which seemed to be agglomerates of 5 µm particles.

### Example 3

A second slurry (prepared as in Example 2) containing the equivalent of 22 g of magnesium was heated gradually to a pot temperature of 153°C as distillate was collected over a 2-hour period. Microscopic examination revealed glassy granular particles in a narrow size distribution around 15 µm.

### Example 4

Coarse crystals of kerosene desolvated magnesium methoxide (20 g, CVC Corporation) were added to 400 ml of TEOS in a 1 litre 3-neck flask. A small amount of solvent was distilled away as the pot temperature rose to 167°C over a two hour period. The solids were collected on a coarse frit, washed with isooctane and dried under moving nitrogen. The material was still much too large to use for a standard catalyst preparation so, it was rubbed through a 150 µm sieve. This example illustrates that the invention is operant in the case where there is no bound alcohol.

### Example 5

A fine paste of kerosene desolvated magnesium methoxide (30 g, CVC Corporation) was added to 300 g TEOS in a ½ litre bottle and rolled in an oil bath for 1 day at 55°C, 1 day at 80°C and 1 day at 105°C then the resulting glassy crystals were filtered, washed with isooctane and dried under moving nitrogen to yield 13.6 g of granular product in the 10-15 µm size range. This example illustrates that, in comparison to Example 4, the glassy reaction product may be prepared in significantly shorter time when the treatment is carried out at higher temperature.

### Comparative Example 1

A magnesium methoxide solution (12%) was prepared by dissolving magnesium metal, by incremental addition, in methanol which contained 0.125 equivalents of tetramethoxysilane as a stabilizer. Crystalline Mg(OMe)₂.4MeOH was prepared by slow precipitation from the stabilized magnesium methoxide solution which had been concentrated by boiling. Pure magnesium methoxide was prepared from Mg(OMe)₂.4MeOH by removal of methanol solvate by drying in a stream of warm nitrogen (to obtain a non-boiled precursor). The following Table 1 summarises the preparation of the resulting magnesium alkoxides.

**Table 1**

| Example No. | Preparative Method | Mg (%wt) | OEt/OMe (mol/mol) | Pro-catalyst Number |
|---|---|---|---|---|
| 1 | Mg(OMe)₂*2MeOH/TEOS reflux to 137°C | 19.7 | -- | 6 |
| 2 | Mg(OMe)₂/TEOS milk reflux to 143°C | 18.5* | 1.97 | 7 |
| 3 | Mg(OMe)₂/TEOS milk reflux to 153°C | 16.7 | 3.70 | 8 |
| 4 | Mg(OMe)₂solid/TEOS reflux to 167°C | 18.3 | -- | 9 |
| 5 | Mg(OMe)₂sand/TEOS stir at 105°C | 20.4 | -- | 10 |
| Comp. | No TEOS reflux | 22.3 | 0 | Comp |

| | | | | |
|---|---|---|---|---|
| * also contains 1.2% Si | | | | |

### Example 6

The white powder obtained from Example 1 by dry screening through a 150 µm sieve onto a 75 µm sieve (8.2 g, 66 mmol), was slurried in 200 ml of a 50/50 (vol/vol) mixture of TiCl₄/chlorobenzene. After adding isobutylphthalate (2.5 ml, 8.7 mmol) the mixture was heated in an oil bath and stirred at 110°C for 60 minutes. The mixture was filtered hot and the solids slurried in 200 ml of fresh TiCl₄/chlorobenzene mixture. Phthaloyl chloride (0.42 ml, 2.9 mmol) and ethyl benzoate (0.37 ml, 2.6 mmol) were added and the mixture stirred at 110°C. After 60 minutes the mixture was filtered hot and the solids slurried again into 200 ml of fresh TiCl₄/chlorobenzene mixture. The slurry was stirred for 30 minutes at 110°C then filtered hot. The solids were allowed to cool to 40°C then washed with six 150 ml portions of isopentane and dried for 100 minutes under moving nitrogen at 40°C. Yield 8.0 g of pink violet pro-catalyst. Analysis: 2.46% Ti, 18.3% Mg, 63.3% Cl.

### Example 7

The white granules from Example 2 (8.2 g, 63 mmol) were slurried in 200 ml of a 50/50 (vol/vol) mixture of TiCl₄/chlorobenzene. After adding isobutylphthalate (2.5 ml, 8.7 mmol) the mixture was heated in an oil bath and stirred at 110°C for 60 minutes. The mixture was filtered hot and the solids slurried in 200 ml of fresh TiCl₄ chlorobenzene mixture. Phthaloyl chloride (0.42 ml, 2.9 mmol) and ethyl benzoate (0.27 µl, 2.6 mmol) were added and the mixture stirred at 110°C. After 60 minutes the mixture was filtered hot and the solids slurried again into 200 ml of fresh TiCl₄/chlorobenzene mixture. The slurry was stirred for 60 minutes at 110°C then filtered hot. The solids were allowed to cool to 40°C then washed with six 150 ml portions of isopentane and dried for 100 minutes under moving nitrogen at 40°C. Yield 9.5 g of light pink pro-catalyst. Analysis: 3.29% Ti, 17.0% Mg, 51.8% Cl, 14.1% phthalate esters, 0.81% ethylbenzoate, 0.18% methanol 0.72% methanol, 6.3% isopentane, less than 0.05% Si.

### Example 8

The granular product from Example 3 (8.2 g, 56 mmol) was slurried in 200 ml of a 50/50 (vol/vol) mixture of TiCl₄/chlorobenzene. After adding isobutylphthalate (2.5 ml, 8.7 mmol) the mixture was heated in an oil bath and stirred at 110°C for 60 minutes. The mixture was filtered hot and the solids slurried in 200 ml of fresh TiCl₄/chlorobenzene mixture. Phthaloyl chloride (0.42 ml, 2.9 mmol) and ethyl benzoate (0.37 ml, 2.6 mmol) were added and the mixture stirred at 110°C. After 60 minutes the mixture was filtered hot and the solids slurried again into 200 ml of fresh TiCl₄/chlorobenzene mixture. The slurry was stirred for 30 minutes at 110°C then filtered hot. The solids were allowed to cool to 40°C then washed with six 150 ml portions of isopentane and dried for 100 minutes under moving nitrogen at 40°C. Yield 8.0 g of medium pink pro-catalyst. Analysis: 2.55% Ti, 18.3% Mg, 8.38% phthalate esters, 0.58% ethylbenzoate, 0.16% ethanol, 0.49% methanol, 0.24% isopentane. Crystalline size (via X-ray powder diffraction) 8.2 nm (82 Å).

### Example 9

The granular product from Example 4 (5.8 g, 44 mmol) was slurried in 150 ml of a 50/50 (vol/vol) mixture of TiCl₄/chlorobenzene. After adding isobutylphthalate (1.74 ml, 5.9 mmol) the mixture was heated in an oil bath and stirred at 110°C for 60 minutes. The mixture was filtered hot and the solids slurried in 150 ml of fresh TiCl₄/chlorobenzene mixture. p-Toluoyl chloride (0.35 ml, 2.6 mmol) was added and the mixture stirred at 110°C. After 60 minutes the mixture was filtered hot and the solids slurried again into 150 ml of fresh TiCl₄/chlorobenzene mixture. The slurry was stirred for 30 minutes at 110°C then filtered hot. The solids were allowed to cool to 40°C then washed with six 150 ml portions of isopentane and dried for 100 minutes under moving nitrogen at 40°C. Yield 5.7 g of light green pro-catalyst. Analysis: 2.95% Ti, 18.4% Mg.

### Example 10

The granular product from Example 5 (5.8 g, 49 mmol) was slurried in 150 ml of a 50/50 (vol/vol) mixture of TiCl₄/chlorobenzene. After adding isobutylphthalate (1.74 ml, 5.9 mmol) the mixture was heated in an oil bath and stirred at 110°C for 60 minutes. The mixture was filtered hot and the solids slurried in 150 ml of fresh TiCl₄/chlorobenzene mixture. p-Toluoyl chloride (0.35 ml, 2.6 mmol) was added and the mixture stirred at 110°C. After 60 minutes the mixture was filtered hot and the solids slurried again into 150 ml of fresh TiCl₄/chlorobenzene mixture. The slurry was stirred for 30 minutes at 110°C then filtered hot. The solids were allowed to cool to 40°C then washed with six 150 ml portions of isopentane and dried for 100 minutes under moving nitrogen at 40°C. Yield 5.8 g of light of green pro-catalyst. Analysis: 2.75% Ti, 18.9% Mg.

### Comparative Example 2

A pro-catalyst was prepared by stirring 50 mmols of the nitrogen desolvated magnesium compound of Comparative Example 1 with 2.5 ml of isobutyl phthalate in 200 ml of 50/50 titanium tetrachloride/chlorobenzene for 1 hour at 115°C followed by two washes at 115°C with that same solvent mixture. Excess titanium was removed by exhaustive isopentane rinses and the pro-catalyst was dried under moving nitrogen at 40°C.

### Examples 11 to 15 and Comparative Example 3

### Autoclave Polymerizations

The component ratios, mode of injection, productivity, xylene solubles (XS) and the polymer bulk densities (B.d.) for polymerizations using the pro-catalysts of Examples 6 to 10 and Comparative Example 2 are shown in Table 2. For LIPP polymerizations the autoclave was charged with 2.7 1 propylene and 132 mmol hydrogen then heated to 65°C whereupon the catalyst components were injected. Polymerization was then carried out at 67°C for 2 hours (or 1 hour where indicated). The catalyst components were either premixed 20 minutes prior to injection or injected without premixing in the order: (1) Diphenyldimethoxysilane (DPDMS) for catalyst nos. 6-10 and diisobutyldimethoxysilane for the comparative example; (2) Triethylaluminum (TEA); (3) Procatalyst. For gas phase polymerizations the catalyst components were injected (using 50 ml of isopentane to provide a prebath) into an autoclave containing flowing propylene vapour (10 g/min) maintained at 2.07 MPa (300 psi) and polymerized at 67°C for two hours. The results of two hour autoclave runs utilizing catalysts of Examples 6 to 10 and Comparative Example 2 are shown in Table 2.

**Table 2**

| Example | Procatalyst Example | Ti (%wt) | TEA/DPDMS/Ti (mmol/mmol/µmol) | Productivity | | X.S (%wt) | B.d. (g/cm³) |
|---|---|---|---|---|---|---|---|
| | | | | Kg/g Ti | Kg/g cat | | |
| 11 | 6 | 2.46 | 0.56/0.14/6.4 n | 2003 | 49.3 | 4.3 | 0.355 |
| | | | 0.56/0.14/6.5 n | 2009 | 49.4 | 3.9 | 0.345 |
| | | | 0.56/0.14/6.4 p | 1904 | 46.8 | 3.6 | 0.385 |
| | | | 0.56/0.14/8/150 n gas | 1200 | 29.5 | 5.6 | -- |
| | | | 0.56/0.105/8/150 n gas | 974 | 24.0 | 4.6 | -- |
| | | | | | | | |
| 12 | 7 | 3.29 | 0.56/.14/8.2 p | 1769 | 58.2 | 2.0 | 0.30 |
| | | | 0.32/0.10/4.3 p | 2185 | 71.9 | 5.0 | 0.29 |
| | | | | | | | |
| 13 | 8 | 2.55 | 0.42/0.105/4.3 p | 2906 | 74.1 | 2.8 | 0.315 |
| | | | 0.32/0.014/3.3 p | 3294 | 84.0 | 3.9 | 0.30 |
| | | | 0.32/0.010/4.3 p | 3124 | 79.7 | 6.6 | 0.305 |
| | | | 0.32/0.014/3.3 p (1hr) | 2154 | 54.9 | 3.6 | -- |
| | | | | | | | |
| 14 | 9 | 2.95 | 0.56/0.105/6.2 p (1hr) | 1644 | 48.5 | 5.0 | 0.31 |
| | | | | | | | |
| 15 | 10 | 2.75 | 0.56/0.105/5.7 p (1hr) | 1564 | 43.0 | 3.8 | 0.31 |
| | | | | | | | |
| Comp Ex. 3 | Comp Ex. 2 | 4.45 | 0.56/0.14/6 p | 171 | 7.6 | 8.1 | 0.34 |
| n - catalyst components injected separately | | | | | | | |
| p - catalyst components premixed 20 min before injection | | | | | | | |

It can clearly be seen by reviewing the results shown in Table 2 that the process of the present invention gives an increase in the productivity of the catalyst, see for example, the results of the polymerization for the comparative catalyst with the results of the other liquid phase polymerizations. The productivities of the catalysts prepared in accordance with the invention are clearly much higher than the productivity of the comparative catalyst. The bulk density of the product made with catalyst 6 is much higher. An increase in bulk density can be an additional advantage of the present invention.

US-A-4,710,482 discloses the use of the Mg₄(OCH₃)₆ (CH₃OH)₁₀ X₂ crystal in a polymerization catalyst. This magnesium alkoxide is another magnesium alkoxide which undergoes metathesis with some difficulty. As shown below, after treatment with tetraethoxysilane, the crystals may be subjected to metathesis to give a high activity catalyst which is capable of producing polypropylene of high bulk density with low fines and a relatively narrow particle size distribution.

### Example 16

Into about 400 ml of cyclohexane in a ½ litre bottle were placed 36 g of roughly dodecahedral Mg₄(OCH₃)₆(CH₃OH)₁₀Cl₂. Over the course of 3 hours about 1/3 of the solvent was boiled away. The filtered and dried product weighed 26.5 g, corresponding to the loss of 56% of the methanol solvate. The entire 26.5 g was slurried with 600 ml of tetraethoxysilane (TEOS) in a 1 litre 3-neck flask equipped with a polytetrafluoroethylene paddle stirrer and a distillation condenser. Under slow stirring the vessel was gently heated to a pot temperature of 155°C where the first distillate was observed. As distillate was removed over the next 2 hours the pot temperature had increased to 167°C. Distillation was stopped after 6 hours when the pot temperature had reached 169°C and 70 ml of distillate had been collected. The solids were collected by decantation when washed with isooctane and dried under moving nitrogen. The yield was 22.3 g of granular product in the 30 to 80 µm size range which appeared somewhat more transparent than the cyclohexane boiled starting material. Analysis: 21.74% Mg and 15.70% Cl.

The granular product (6.0 g, 53.7 mmol) was slurried in 200 ml of a 50/50 (vol/vol) mixture of TiCl₄/chlorobenzene. After adding isobutylphthalate (2.5 ml, 8.7 mmol) the mixture was heated in an oil bath and stirred at 115°C for 60 minutes. The mixture was filtered hot and the solids slurried in 200 ml of fresh TiCl₄/chlorobenzene mixture. Phthaloyl chloride (0.5 ml, 3.4 mmol) and p-toluoyl chloride (0.5 ml, 3.7 mmol) were added and the mixture stirred at 115°C. After 60 minutes the mixture was filtered hot and the solids slurried again into 200 ml of fresh TiCl₄/chlorobenzene mixture. The slurry was stirred for 30 minutes at 115°C then filtered hot. The solids were then slurried into 100 ml of fresh TiCl₄/chlorobenzene mixture, heated at 115°C for 10 min and filtered hot. The solids were allowed to cool to 40°C then washed with six 150 ml portions of isopentane and dried for 100 minutes under moving nitrogen at 40°C. The yield was 6.4 g of violet pro-catalyst. Analysis: 2.18% Ti, 20.9% Mg.

### Comparative Example 4

A comparative pro-catalyst was made by repeating the synthesis Example 16 except: 10 gm of the crystalline Mg(OMe)₆(MeOH)₁₀Cl₂, was used as the magnesium source, 2.8 ml of isobutyl phthalate were used, 0.1 ml of phthaloyl chloride, no p-toluoyl chloride was used and there was no TEOS boiling step. Analysis 3.41% Ti, 19.6% Mg.

### Example 17 (Cyclohexane and TEOS treatment combined into one step)

Into a solution of 300 g of cyclohexane and 120 g TEOS were placed 40 g of dodecahedral Mg₄(OMe)₆(MeOH)₁₀Cl₂ crystals. The slurry was boiled gently until a 20-30% volume decrease had occurred. The solids were collected by filtration, washed once with isooctane and dried under moving nitrogen. Yield 29.2 g of translucent, dodecahedral crystals. A procatalyst was then prepared exactly as in Example 16. Analysis: 1.51% Ti, 19.9% Mg.

The results of LIPP polymerization carried out using the procatalysts of Examples 16 and 17 and Comparative Example 4 are shown in Table 3. It can be seen that the productivity is significantly greater for catalyst prepared from the TEOS treated material. Furthermore, the selectivity towards isotactic polymer (as measured by the xylene solubles content) is also significantly improved. Using the above polymerization procedure, the following results were obtained.

**Table 3.**

| Comparison of 1 hour productivities in 67°C LIPP polymerizations. | | | | | | |
|---|---|---|---|---|---|---|
| Procatalyst | Ti (%wt) | TEA/SCA/Ti (mmol/mmol/µmol) | Productivity | | X.S. (%wt) | B.d (g/cm³) |
| | | | Kg/g Ti | Kg/g cat | | |
| Comp Ex 4 | 3.41 | 2.2/.14/9.5 n | 765 | 26.1 | 7.7 | -- |
| | | | | | | |
| Example 16 | 2.18 | 0.56/0.05/6.5 p | 1663 | 36.3 | 4.0 | 0.38 |
| | | | | | | |
| Example 17 | 1.51 | 0.56/0.97/4.5 p | 2225 | 33.6 | 3.7 | 0.37 |
| n - catalyst components injected separately | | | | | | |
| p - catalyst components premixed 20 min before injection | | | | | | |
| SCA - diphenyldimethoxysilane for Comp Ex 4 | | | | | | |
| SCA - diisobutyldimethoxysilane for Examples 16 and 17 | | | | | | |

Another dramatic improvement over the comparative catalyst is shown in the particle size distribution of the polymer. The total amount of particles falling below 120 µm in Examples 16 and 17 is only about 1/5 of that found in Comparative Example 4.

### Example 18

Into an 0.25 litre jar was placed 18.4 g of porous silica microspheres of 17 µm average particle size. Over the course of about 15 min 41 g of 12% methanolic magnesium methoxide was added dropwise, while stirring with a spatula, to yield about 59 g of a dry free flowing powder. The powder was allowed to stand under flowing nitrogen until the weight had decreased to about 28 gm (1 hr). The entire quantity of dry powder was slurried with 500 g of tetraethoxysilane (TEOS) in a 1 litre 3-neck flask equipped with polytetrafluroethylene paddle stirrer and a distillation condenser. Under slow stirring the vessel was gradually heated (over a 30 hr period) to a pot temperature of 154°C while about 15 ml of distillate had been collected. The solids were collected by filtration then washed with isooctane and dried under moving nitrogen. Yield 30.1 g of free flowing powder which appeared somewhat more opaque than the starting material.

The powder (26.9 g) was slurried in 150 ml of a 50/50 (vol/vol) mixture of TiCl₄/chlorobenzene. After adding isobutylphthalate (1.74 ml, 6.0 mmol) the mixture was heated in an oil bath and stirred at 110°C for 60 minutes. The mixture was filtered hot and the solids slurried in 150 ml of fresh TiCl₄/chlorobenzene mixture. p-Toluoyl chloride (0.5 ml, 3.7 mmol) was added and the mixture stirred at 110°C. After 60 minutes the mixture was filtered hot and the solids slurried again into 150 ml of fresh TiCl₄ chlorobenzene mixture. The slurry was stirred for 30 minutes at 110°C then filtered hot. The solids were allowed to cool to 40°C then washed with six 150 ml portions of isopentane and dried for 100 minutes under moving nitrogen at 40°C. Yield 21.1 g of pale beige procatalyst A. Analysis: 2.63% Ti, 4.09% Mg.

### Example 19

Into an 0.25 litre bottle were placed 110 g of 12% methanolic magnesium methoxide solution and 9.0 g of porous silica microspheres of 17 µm average particle size. Over the course of 2 hours about 44 g of the solvent was boiled away (to yield an approximately 20% solution of magnesium methoxide). The slurry was filtered hot, through a coarse glass fritted funnel, then the solids washed twice with a 25% solution of isopropanol in isooctane and dried for 1 hour under moving nitrogen. The entire amount of dried powder was slurried with 500 g of tetraethoxysilane (TEOS) in a 1 litre 3-neck flask equipped with a polytetrafluoroethylene paddle stirrer and a distillation condenser. Under slow stirring the vessel was rapidly heated (over a 2 hr period) to a pot temperature of 164°C while about 10 ml of distillate had been collected. After overnight stirring at 164°C the solids were collected by filtration then washed with isooctane and dried under moving nitrogen. Yield 25.6 g of clusters of spheres.

The powder (22.9 g) was slurried in 150 ml of a 50/50 (vol/vol) mixture of TiCl₄/chlorobenzene. After adding isobutylphthalate (1.74 ml, 6.0 mmol) the mixture was heated in an oil bath and stirred at 110°C for 60 minutes. The mixture was filtered hot and the solids slurried in 200 ml of fresh TiCl₄/chlorobenzene mixture. p-Toluoyl chloride (0.5 ml, 3.7 mmol) was added and the mixture stirred at 110°C. After 60 minutes the mixture was filtered hot and the solids slurried again into 200 ml of fresh TiCl₄/chlorobenzene mixture. The slurry was stirred for 30 minutes at 110°C then filtered hot. The solids were allowed to cool to 40°C then washed with six 150 ml portions of isopentane and dried for 100 minutes under moving nitrogen at 40°C. Yield 21.5 g of pale beige pro-catalyst B.
The 1 hour productivities in 67'C LIPP polymerizations using procatalysts A and B of Examples 18 and 19 are shown in Table 4.

**Table 4**

| Catalyst | Ti (%wt) | TEA/SCA/Ti (mmol/mmol/µmol) | Productivity Kg/g cat | X.S. (%wt) | B.d. (g/cm³) |
|---|---|---|---|---|---|
| A | 2.63 | 1.0/0.35/10 p (1 hr) | 8.2 | 3.2 | 0.43 |
| | | 1.0/0.35/10 p (1 hr) | 8.7 | 3.4 | 0.43 |
| | | | | | |
| B | 4.24 | 0.56/0.10/21 p (1 hr) | 13.4 | 5.0 | 0.40 |
| p - catalyst components premixed 20 min before injection | | | | | |
| SCA - diisobutyldimethoxysilane | | | | | |

The results shown in the above Table 4 indicate that it is possible to make a catalyst according to the present invention which will give polymer with greatly increased bulk density over that of Comparative Example 3 (Table 2). The productivities were expectedly low because of the dilution with the inert silica support.

### Example 20

As in Example 17, magnesium compounds of the formula Mg₄(OCH₃)₆ (CH₃OH)₁₀ X₂ were used to prepare polymerization catalysts. In one experiment, X was chlorine and in the other, X was resorcinol. The desolvation was carried out by using 40 grams of the appropriate magnesium compound slurried in 300 grams of cyclohexane containing 120 grams of triethoxysilane. This slurry was then boiled until a decrease of 20-30% in solvent volume had occurred.

The catalysts were prepared by stirring 50 millimols of the magnesium compound with 2.5 ml of isobutyl phthalate in 200 ml of 50/50 titanium tetrachloride/chlorobenzene for 1 hour at 115°C followed by two washes at 115°C with that same solvent mixture. Excess titanium was removed by exhaustive isopentane rinses and the catalyst was dried under moving nitrogen at 40°C. Propylene was then polymerized using the resulting pro-catalyst in combination with triethyl aluminum and diisobutyl dimethoxysilane as cocatalysts. The polymerization was carried out for 1 hour at 67°C in a LIPP reactor. With the pro-catalyst where X was chlorine, the productivity was 33.6 kg of polypropylene per gram of catalyst-hr. and the xylene solubles were 3.7%. With the pro-catalyst where X was resorcinol, the productivity was 53.5 kg polypropylene per gram of catalyst-hr. and the xylene solubles were 3.4%.

### Examples 21 and 22 and Comparative Examples 5, 6 and 7

12% magnesium methoxide solutions were prepared by dissolving magnesium metal by incremental addition into methanol which contained 0.125 equivalents of tetramethoxysilane as a solution stabilizer. Crystalline magnesium methoxide-Mg(OMe)₂.4MeOH was prepared by slow precipitation from magnesium methoxide solutions which were first concentrated by boiling. Pure magnesium methoxide was prepared from Mg(OMe)₂.4MeOH by removal of methanol solvate by either drying it in a stream of warm nitrogen (Comparative Example 5) or by azeotropic distillation from kerosene (Comparative Example 6). A partial conversion to ethoxide was effected by slurrying Mg(OMe)₂.4MeOH in tetraethoxysilane to obtain a fine powder (Comparative Example 7). More complete conversions to ethoxide were effected by boiling the solid materials from Comparative Examples 6 and 7 in tetraethoxysilane at a temperature of about 165°C (Examples 21 and 22).

Pro-catalysts were prepared from these materials by stirring 50 to 60 mmols of the appropriate magnesium compound with 2.5 ml of isobutyl phthalate and 200 ml of 50/50 titanium tetrachloride/chlorobenzene for 1 hour at 150°C followed by two washes at 115°C with that same solvent mixture. Excess titanium was removed by exhaustive isopentane rinses and the pro-catalyst was dried under moving nitrogen at 40°C.

The procatalysts were then used to polymerize propylene in a LIPP reactor. The polymerizations were of 1 hour duration at 67°C with a mixture of triethylaluminum and diisobutyldimethoxysilane as cocatalysts. The results are shown in Table 5:

**Table 5**

| Precursor | | Productivity kg PP/g cat hr. | XS % wt | B.d. g/cm³ |
|---|---|---|---|---|
| Comp. Ex. 5 | N₂ dry Mg(OMe)₂. 4MeOH | 7.6 | 8.1 | 0.34 |
| | | | | |
| Comp. Ex. 6 | Precipitate of Mg(OMe)₂. 4MeOH with TEOS | 23.4 | 4.8 | 0.405 |
| | | | | |
| Example 21 | TEOS boil of TEOS precipitate above | 54.9 | 3.6 | .30 |
| | | | | |
| Comp. Ex. 7 | Boil Mg(OMe)₂. 4MeOH in kerosene | 29.1 | 4.5 | 0.43 |
| | | | | |
| Example 22 | TEOS boil of kerosene precipitate | 48.5 | 5.0 | 0.31 |
| TEOS = tetraethoxysilane | | | | |
| X.S. = xylene solubles | | | | |
| B.d. = polymer bulk density | | | | |

It can be seen that all the treatments which were carried out on dry magnesium methoxide increased its productivity. However, when the TEOS and kerosene precipitates were boiled in TEOS, there was a dramatic increase in the productivity of the catalyst.

## Claims

1. A process for preparing a support for use in the preparation of a polymerisation catalyst component which comprises reacting, in the absence of an aluminium halide, a magnesium methoxide, optionally having bound methanol, with an alkoxysilane of the formula R′ₘSi(OR)₄₋ₘ, wherein R is CₙH₂ₙ₊₁, n is at least 2, m is from 0 to less than 4 and R' is aryl or alkyl, to form a magnesium alkoxide which more readily undergoes metathesis with a halogen compound than does the starting magnesium methoxide, the reaction being carried out at a temperature at or above the temperature at which the alcohol formed, and any bound methanol, dissociates from the magnesium alkoxide formed.

2. A process according to claim 1, wherein the alkoxysilane is tetraethoxysilane, tetraisopropoxysilane, tetrabutoxysilane or tetra-n-propoxysilane.

3. A process according to claim 1 or 2, wherein the magnesium methoxide is [Mg(OMe)₂].mMeOH where O ≤ m ≤4 or Mg₄(OCH₃)₆ (CH₃OH)₁₀ X where X is a counter ion or ions with a total charge of -2.

4. A process according to claim 1, 2 or 3, wherein the alcohol formed is ethanol and the temperature is at least 105°C.

5. A process according to any one of claims 1 to 4, wherein the alkoxysilane is diluted with an inert solvent.

6. A process according to claim 5, wherein the solvent is at least one of kerosene, cyclohexane, chlorobenzene, isooctane, decahydronaphthalene, tetrahydronaphthalene, xylene, toluene and high boiling kerosene fractions.

7. A process according to any one of the preceding claims, wherein the resulting magnesium alkoxide is subjected to metathesis with a halogen compound of a transition metal to provide a supported polymerisation catalyst component.

8. A process according to claim 7, wherein titanium tetrachloride is used as the halogen compound of a transition metal.

## Patentansprüche

1. Verfahren zur Herstellung eines Trägers zur Verwendung bei der Herstellung einer Polymerisationskatalysatorkomponente, umfassend die Umsetzung eines Magnesiummethoxids, gegebenenfalls mit gebundenem Methanol, mit einem Alkoxysilan der Formel R'ₘSi(OR)₄₋ₘ, in der R CₙH₂ₙ₊₁ ist, n mindestens 2 ist, m 0 bis weniger als 4 ist und R' Aryl oder Alkyl ist, in Abwesenheit eines Aluminiumhalogenids zur Bildung eines Magnesiumalkoxids, das leichter eine doppelte Umsetzung (Metathese) mit einer Halogenverbindung eingeht als das Ausgangsmagnesiummethoxid, wobei die Reaktion bei einer Temperatur bei oder über der Temperatur durchgeführt wird, bei der der entstandene Alkohol und etwaiges gebundenes Methanol von dem entstandenen Magnesiumalkoxid abgespalten wird.

2. Verfahren nach Anspruch 1, wobei das Alkoxysilan Tetraethoxysilan, Tetraisopropoxysilan, Tetrabutoxysilan oder Tetran-propoxysilan ist.

3. Verfahren nach Anspruch 1 oder 2, wobei das Magnesiumoxid [Mg(OMe)₂].mMeOH, wobei 0 ≤ m ≤ 4 ist, oder Mg₄(OCH₃)₆(CH₃OH)₁₀X ist, wobei X ein Gegenion oder -ionen ist mit einer Gesamtladung von -2.

4. Verfahren nach Anspruch 1, 2 oder 3, wobei der entstandene Alkohol Ethanol ist und die Temperatur mindestens 105°C beträgt.

5. Verfahren nach einem der Ansprüche 1 bis 4, wobei das Alkoxysilan mit einem inerten Lösungsmittel verdünnt wird.

6. Verfahren nach Anspruch 5, wobei das Lösungsmittel mindestens eines von Kerosin, Cyclohexan, Chlorbenzol, Isooctan, Decahydronaphthalin, Tetrahydronaphthalin, Xylol, Toluol und höher siedenden Kerosinfraktionen ist.

7. Verfahren nach einem der vorangehenden Ansprüche, wobei das erhaltene Magnesiumalkoxid der doppelten Umsetzung mit einer Halogenverbindung eines Übergangsmetalls unterworfen wird unter Bildung einer Polymerisationskatalysatorkomponente auf einem Träger.

8. Verfahren nach Anspruch 7, wobei Titantetrachlorid als Halogenverbindung eines Übergangsmetalls verwendet wird.

## Revendications

1. Procédé qui consiste à préparer un support destiné à être utilisé dans la préparation d'un composant de catalyseur de polymérisation qui comprend le fait de faire réagir en l'absence d'un halogénure d'aluminium, un méthylate de magnésium, ayant éventuellement du méthanol lié, avec un alcoxysilane de formule R'ₘSi(OR)₄₋ₘ, dans laquelle R représente CₙH₂ₙ₊₁, n vaut au moins 2, m vaut 0 et moins de 4 et R' représente un groupe aryle ou alkyle, afin de former un alcoolate de magnésium qui subit une métathèse avec un composé halogéné plus facilement que ne le fait le méthylate de magnésium de départ, la réaction étant effectuée à une température supérieure ou égale à la température à laquelle se forme l'alcool, et tout méthanol lié se dissocie de l'alcoolate de magnésium formé.

2. Procédé conforme à la revendication 1, dans lequel l'alcoxysilane est le tétraéthoxysilane, tétraisopropoxysilane, tétrabutoxysilane, ou tétra-n-propoxysilane.

3. Procédé conforme à la revendication 1 ou 2, dans lequel le méthylate de magnésium est [Mg(OMe)₂].mMeOH où 0 ≤ m ≤ 4, ou Mg₄(OCH₃)₆(CH₃OH)₁₀ X où X représente un contre-ion ou des ions avec une charge totale de -2.

4. Procédé conforme à la revendication 1, 2 ou 3, dans lequel l'alcool formé est l'éthanol et la température vaut au moins 105° C.

5. Procédé conforme à l'une quelconque des revendications 1 à 4, dans lequel on dilue l'alcoxysilane avec un solvant inerte.

6. Procédé conforme à la revendication 5, dans lequel le solvant est au moins l'un des kérosène, cyclohexane, chlorobenzène, iso-octane, décahydronaphtalène, tétrahydronaphtalène, xylène, toluène, et fractions de kérosène à point d'ébullition élevé.

7. Procédé conforme à l'une quelconque des précédentes revendications, dans lequel on soumet l'alcoolate de magnésium résultant à une métathèse avec un composé halogéné d'un métal de transition afin de fournir un composant de catalyseur supporté de polymérisation.

8. Procédé conforme à la revendication 7, dans lequel on utilise le tétrachlorure de titane comme composé halogéné d'un métal de transition.
